# EUROPEAN PATENT SPECIFICATION

(11) **EP 2 016 705 B1**
(45) Date of publication and mention of the grant of the patent: **19.09.2018**
(21) Application number: 07761617.5
(22) Date of filing: 01.05.2007
(51) Int. Cl.: H04L 12/18

(54) **MANAGING CONFERENCE CALL PARTICIPANTS IN A ROSTER**
HANDHABUNG VON TELEFONKONFERENZTEILNEHMERN IN EINEM VERZEICHNIS
GESTION DES PARTICIPANTS À UNE CONFÉRENCE TÉLÉPHONIQUE DANS UNE LISTE

(30) Priority: 05.05.2006 US 381963
(43) Date of publication of application: 21.01.2009
(73) Proprietor: Cisco Technology, Inc., San Jose, CA 95134-1706 (US)
(72) Inventor: SHARMA, Heeral Roy, San Jose, California 95134 (US); BAIRD, Randall B., Austin, Texas 78730 (US)
(74) Representative: Kazi, Ilya
(86) International application number: PCT/US2007/067843
(87) International publication number: WO 2007/130924

(56) References cited:
- US-A1- 2003 158 900
- US-A1- 2004 013 252
- US-A1- 2004 246 121
- US-A1- 2005 015 444
- US-A1- 2005 125 246
- US-A1- 2005 149 876
- US-A1- 2006 053 195
- US-A1- 2007 133 437

## Description

### FIELD

This patent document pertains generally to a method and system for organizing meeting participants, and more particularly, but not by way of limitation, to managing a roster of conference call participants.

### BACKGROUND

As businesses and organizations continue to grow, using technology to enable long-distance collaboration becomes increasingly more important. Traditionally, solutions involving conference calling are limited to voice communication. With the introduction of the Internet, web-based solutions enabled co-workers and customers to interact in virtual meetings using rich-format media, such as presentations, video, and interactive whiteboards. However, regardless of what technology is used to provide conferencing, the remote nature of conference calls and online meetings highlights the problem of being unable to ascertain the identity of all of the participants in attendance. Furthermore, when a person is talking or using a shared interactive resource (e.g., a virtual whiteboard) the other people in remote locations may not be able to immediately identify the speaker or presenter.

US 2005/149876 discloses a method for collaborative call management, wherein a graphical user interface (GUI) element may be presented in connection with a collaborative call. The GUI element may display a listing of call participants and a status of each participant. Example participant states may include an on-call state, an off-call state, a currently speaking state, a waiting to speak state, and a paused-call state. In operation, information presented in the GUI element may change in response to a status change of a call participant.. US 2003/158900 discloses a conference call system that includes a conference bridge configured to conference together communications between conference participants into a conference call. A conference monitor may be configured to allow a host to dynamically create a web page to provide an indication of ones of said conference participants who have joined the conference call.. US 2005/015444 discloses a system to schedule and configure video and audio conferences, comprising a server and one or more audio/video conferencing devices interconnected through a public or private data network. In one embodiment, a graphical user interface (GUI) provides for an intuitive means to graphically view and configure one or more conferences, participants, and conference call configuration settings.

### BRIEF DESCRIPTION OF THE DRAWINGS

In the drawings, which are not necessarily drawn to scale, like numerals describe substantially similar components throughout the several views. Like numerals having different letter suffixes represent different instances of substantially similar components. The drawings illustrate generally, by way of example, but not by way of limitation, various embodiments discussed in the present document.
**FIG. 1** illustrates an example of a networked environment.
**FIG. 2** is a flowchart illustrating generally a method of managing conference participants.
**FIG. 3** illustrates an example of an initial user interface that may be presented to a user.
**FIG. 4** illustrates an example of a user interface that may be used to join a meeting as a conference room.
**FIG. 5** is an example user interface after four people have joined a meeting.
**FIG. 6** is a flowchart illustrating generally a method of associating a meeting participant with a conference room.
**FIG. 7** is a flowchart illustrating generally a method of determining who the active speaker is in a conference call.
**FIG. 8** is an example user interface showing the state of the conference call participants at some point in time.
**FIG. 9** illustrates a diagrammatic representation of a machine capable of performing the systems and methods described herein.
**FIG. 10** is a schematic diagram illustrating an exemplary sound processing system capable of receiving and analyzing a voice sample.

### DETAILED DESCRIPTION

The following detailed description includes references to the accompanying drawings, which form a part of the detailed description. The drawings show, by way of illustration, specific embodiments in which the invention may be practiced. These example embodiments, which are also referred to herein as "examples," are described in enough detail to enable those skilled in the art to practice the invention. The example embodiments may be combined; other embodiments may be utilized, or structural, logical and electrical changes may be made without departing from the scope of the present invention. The following detailed description is, therefore, not to be taken in a limiting sense, and the scope of the present invention is defined by the appended claims and their equivalents.

In this document, the terms "a" or "an" are used, as is common in patent documents, to include one or more than one. In this document, the term "or" is used to refer to a nonexclusive or, unless otherwise indicated.

### Introduction

Example embodiments allow grouping meeting participants based on their location to facilitate maintaining accurate rosters. In this detailed description, a networked environment is described by way of example; however, similar systems and methods could be used in stand-alone environments.

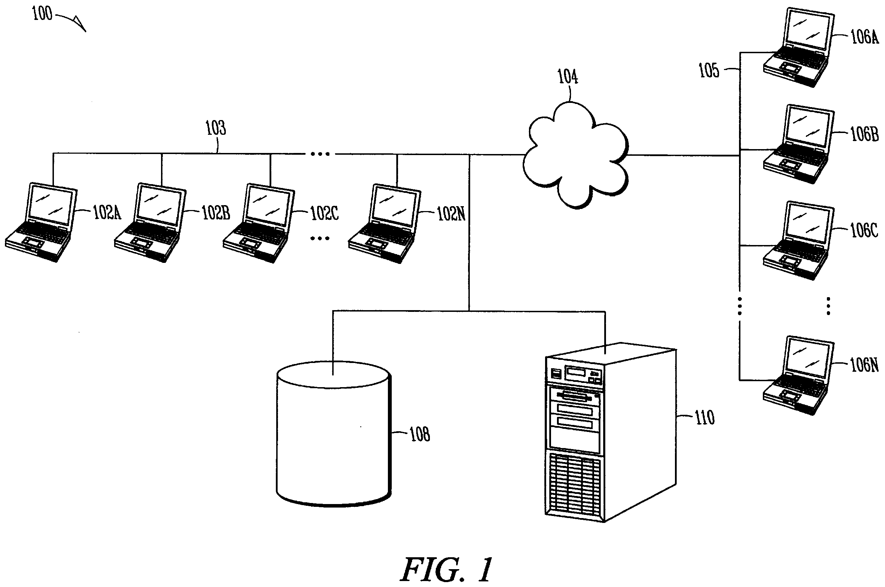

**FIG. 1** illustrates an example of a networked environment **100.** A group of local computer or client workstations **102A, 102B, 102C,** ..., **102N** are connected in a local area network (LAN) **103.** In this example, the LAN **103** is connected to an external network **104,** which could be the Internet, a satellite connection, a wireless network(s), or any other network(s). In addition, a wide area network (WAN) **105** is provided comprising a group of remote computer or client workstations **106A, 106B, 106C,** ..., **106N** connected to the external network **104.** The external network **104** may include wired or wireless computer data networking and telephonic networking. The LAN **103** is also connected to a database server **108** and a network server **110.** In certain examples, the network server **110** includes one or more collaboration applications (e.g., Cisco MeetingPlace). One or more local client workstations **102** or remote client workstations **106** are able to connect to the network server **110** to use the one or more collaboration applications. In certain examples, the database server **108** includes one or more database management systems (DBMS) (e.g., Microsoft SQL Server, Oracle), which are used to enable the example systems and methods described below.

To provide conferencing, local computer or client workstations **102A, 102B, 102C,** ..., **102N** and remote computer or client workstations **106A, 106B, 106C,** ..., **106N** may be communicatively coupled to a conference end point (not shown). Conference end points can include devices such as microphones, personal digital assistants, video conferencing stations, telephonic devices (e.g., a cellular telephone), or specialized computers and/or software systems. In an alternative embodiment, one or more conference end points may be directly or indirectly connected to the external network **104** to provide communication to the other conference end points.

### Example Embodiments

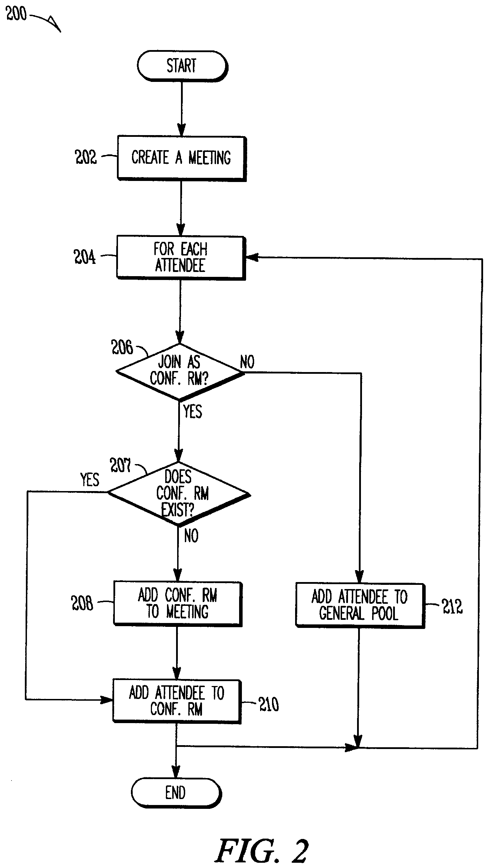

**FIG. 2** is a flowchart illustrating generally a method **200** of managing conference participants. At **202,** a user creates a meeting. For example, the user can create a meeting using collaboration software, such as MeetingPlace Express. After the meeting is created, invitations that include a method of connecting to the meeting (e.g., a web URL) are forwarded to each invitee. In certain examples, the user, acting as a "meeting organizer," may have particular administrative powers, such as securing the meeting using passwords or other methods, inviting participants, removing participants, or disbanding the meeting. Additionally, the meeting organizer may be able to assign certain duties or reassign the role of the meeting organizer to another meeting attendee.

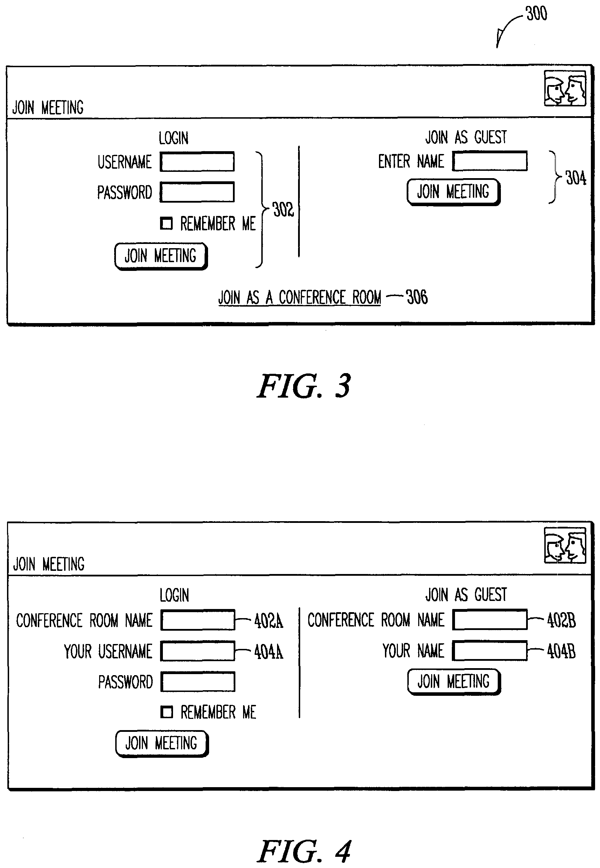

At **204,** as attendees connect to the meeting using client software, each one must make a choice of how to join. In an example, an attendee uses client software to connect to a meeting server. The attendee may first indicate which meeting she would like to attend, such as by using a specific web URL or by choosing a meeting from a list of available meetings. The user may then be presented with an interface giving her the ability to join the meeting or create a conference room. **FIG. 3** illustrates an example of an initial user interface **300** that may be presented to a user. In this example, a user can provide login information using the controls **302,** join the meeting as a guest using controls **304,** or join the meeting as a conference room using the link **306.** In other examples, a user, such as a meeting organizer, can provide information that identifies another meeting participant, effectively adding the meeting participant to the roster. This flexibility in operation may help to maintain a conference room roster's integrity and ensure completeness.

Returning to **FIG. 2****,** at **206,** the method **200** may then determine if the attendee has indicated whether she wishes to join the meeting as a conference room. If the attendee indicates that she should join as a conference room, then at **207** the method **200** checks whether the conference room has already been added to the meeting. If the conference room already exists in the meeting, then the attendee is notified and the method proceeds to step **210.** If the conference room has not been added to the meeting, then at **208,** information about the conference room is collected and the conference room is added. In an example embodiment, the information indicating the conference room is reflected in a shared user interface. This will be discussed in more detail below. In an example embodiment, when an attendee wishes to join as a conference room, they may provide a name or description of the conference room in addition to their own login information. **FIG. 4** illustrates an example of a user interface **400** that may be used to join a meeting as a conference room. In this example, a user is provided controls **402A, 402B** to supply pertinent information about the conference room, along with controls **404A, 404B** to supply his information.

At **210,** the attendee joins the meeting and is related to the conference room that he created. In an example, the attendee's name is shown indented or in some other way related to the conference room that they created in a shared user interface. This may provide an easy way for other attendees to determine which attendees are in which conference rooms.

At **212,** if the attendee chose not to join the meeting as a conference room, then their login information is captured and the attendee is not initially related to any conference room in the shared user interface. In an example, the attendee is placed in an area in the shared user interface that indicates a "general pool" of unassigned participants or participants attending outside of a conference room.

In one example embodiment, the attendee names are grouped and displayed into a hierarchical tree. The hierarchical tree may, for example, consist of one or more rosters and sub-rosters. For example, the roster comprising the top level of the hierarchy may consist of conference rooms and the lower levels (e.g., sub-rosters) may consist of attendees or participants. In another example, the top level can comprise of voice connections and lower levels can comprise of participants associated with the voice connection. In a further example, the top-most level of the hierarchy may consist of broader locations, such as a city (e.g., New York Office) or a building (e.g., Building F); one or more intermediate levels may describe office locations (e.g., Downtown Office) or conference rooms; and the lowest level of the hierarchy may comprise individual or groups of participants.

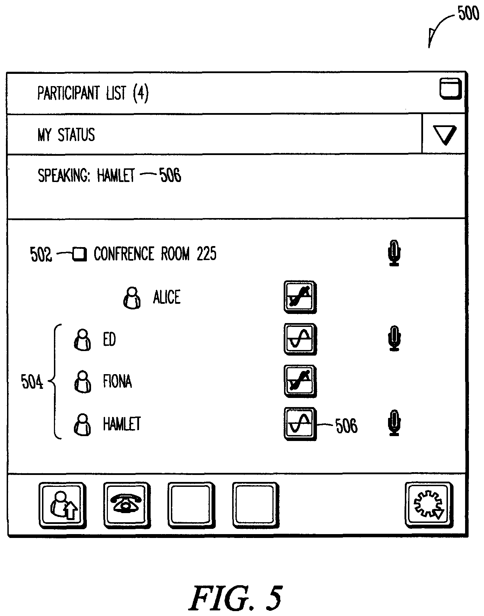

**FIG. 5** is an example user interface **500** after four people have joined a meeting. In this example, Alice is shown to have joined the meeting as a conference room, "Conference Room 225," **502** and is shown as being in the conference room in the sub-roster of the conference room. Ed, Fiona, and Hamlet are shown by way of example to have all joined the meeting as individual participants and are grouped in the general or unassigned pool **504.** It may however be that Ed, Fiona, and Hamlet are in one or more conference rooms, but that they have not been associated with the conference room yet. Alternatively, the unassigned participants may be unassociated with a conference room, such as when an individual connects from a remote location (e.g., a hotel room or a home office). When this is the case, individuals may choose to connect and be placed in the general unassigned pool **504** or they may choose to create a conference room and name it appropriately to indicate their location. For example, a user connecting from a home office may choose to create a conference room named "Hamlet's Home Office." The user Hamlet could then semi-automatically or optionally automatically, without human intervention, is associated with the personalized conference room and the user interface **500** would then be updated to reflect this association by displaying Hamlet in the personalized conference room's sub-roster. After each meeting participant has joined the meeting, certain actions can cause an automatic or semi-automatic update of the user interface **500** to indicate which participants are associated with which conference rooms.

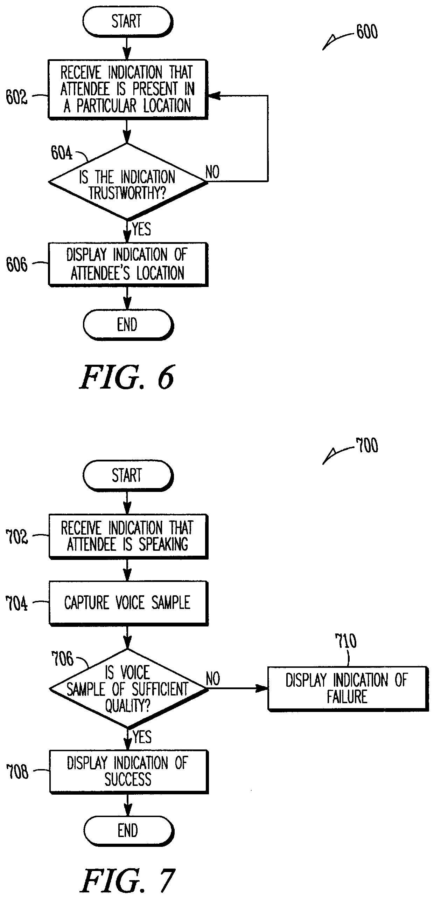

**FIG. 6** is a flowchart illustrating generally an example method **600** of associating a meeting participant with a conference room. At **602,** an indication that an attendee is present in a particular location (e.g., a conference room) is received. In an example embodiment, the indication can be a result of a participant's action, such as pressing a keystroke on a keyboard, providing a mouse action (e.g., left and right click simultaneously), or a voice command. The keystroke, mouse action, or voice command can then be traced to its source and, using prior knowledge, a participant's location may be determined. For example, when a participant issues a keyboard command, their computer's network address may be determined and based on information, such as an access point's IP address, a correlating conference room or other physical location can be determined. In an example embodiment, the indication may be provided by another user, such as a conference room manager, who provides the indication that the participant is present in the conference room. The conference room manager may, for example, click and drag the participant's name to the conference room in the shared user interface, thereby "filing" or associating the participant with the conference room. In another example, the conference room manager may have access to a special user interface that allows her to manage the associations of the participants in the general pool and the participants in her conference room.

In other examples, the indication is a combination of indications. For example, when a meeting participant speaks, a voice channel is activated. The active voice channel can be used in conjunction with another indication, such as a keyboard or mouse action, to provide a combined indication of the active speaker's location and identity. In such an example, the active voice channel can be used to determine a meeting participant's location and the keyboard or mouse action can be used to determine the meeting participant's identity. Alternatively, the method **600** may use voice recognition to determine the active speaker's identity. In some examples, the secondary indication, e.g., keyboard or mouse action, is provided by another meeting participant other than the active speaker. This flexibility can allow those meeting participants that don't have a computer available to be identified and associated with a location to display to other participants.

Optionally, at **604** the indication is evaluated for its trustworthiness. If the indication is provided using a manual method, such as by clicking and dragging the participant's name and icon, then the evaluation may not be necessary. However, with certain methods, such as voice recognition, a proper identification may be necessary before associating a participant with a conference room. With voice recognition, for example, if a voice sample is not clear, overlaps with another voice or audio signal, or does not contain enough information to make a positive match, the method **600** may not automatically associate the participant with a conference room.

At **606,** if the indication is verified, then the shared user interface is updated to reflect the new status of the moved participant. In an example embodiment, the association is provided by grouping attendees in a sub-roster depicting a relationship to a conference room. The method **600** can be reused to reassign a meeting participant when he moves or when he was incorrectly associated with a location. For example, if Alice moves to another conference room, then the method **600** can detect **602** a new indication of her location and provided it is trustworthy, update **606** the shared user interface to reflect her new status.

In an example embodiment, the shared user interface **500,** as illustrated by way of example in **FIG. 5****,** is shared among all those in attendance. For example, in a conference call that provides voice and Internet conferencing, each person may have an individual computer to view the Internet portion (e.g., presentation or whiteboard). These users could then access the shared user interface **500** using their computers. In an example embodiment, the user interface **500** is only viewable by the conference room manager.

In other examples, another use of the shared user interface is to provide the participants an indication of who is currently speaking or in control. For example, referring to **FIG. 5****,** when Alice speaks, the shared user interface **500** may change to indicate that Alice is the current speaker. Alice's name could for example be highlighted, set to a different color, or changed to a different font. Other techniques may be used to highlight Alice as the current speaker. An icon could appear or change next to her name or her name could appear in a special area **506** of the user interface.

**FIG. 7** is a flowchart illustrating generally an example method **700** of determining who the active speaker is in a conference call. At **702,** an indication is received that an attendee is speaking. In an example, the indication is a manual interaction, such as a keystroke or mouse action. For example, when Fiona speaks, she could indicate to the other participants that she is the current speaker by holding down the space bar. As long as the space bar is held down, display of her name could be changed or an icon could be used as discussed above to indicate that she is the person speaking. In another example, the indication is provided by another meeting participant, other than the active speaker. For example, Alice can provide the indication that Fiona is speaking by using a user interface element, such as a keystroke or mouse action. In an example, the indication is an automatic or semi-automatic interaction, such as by using a voice print. In general, if a voice sample has previously been recorded and is available, the active speaker's voice could be captured and compared to a database of voice prints to determine if the speaker is a known user. In such a case, the prior knowledge is used to accurately identify the speaker and the user interface is updated to reflect this.

At **704,** a voice sample of the current speaker is captured. It may be preferable to only attempt to capture a voice sample when a manual indication is supplied by the current speaker. This may provide for a cleaner sample as the speaker can control when the sample is taken. In a busy conference room, there may be side conversations or other speakers that disrupt or interfere with the process of capturing a clean sample of the speaker's voice. In an example, the sample is captured only if it is the loudest signal available.

At **706,** the voice sample may be analyzed for quality. The sample could be of insufficient quality for several reasons including insufficient length of the recorded sample, excess background noise, or signal corruption. If the voice sample is below a threshold of quality needed to ensure future voice matching, then at **710,** the sample may be discarded and an indication of failure may be displayed on the shared user interface **500.** If the sample is found to be of sufficient quality, then it may be associated with the participant, stored, and an indication of success is displayed.

For example, assume Hamlet decides to speak and has not spoken before. During his vocal contribution, he or another participant may provide an indication that he is the active speaker by pressing an iconic button on the example user interface **500.** The method **700** can capture his voice sample and determine that it is a good sample. The method **700** then provides **712** an indication of the successful voice capture, such as by displaying a popup window to Hamlet that the voice capture was successful and changing an icon **506** on the shared user interface **500** to indicate that Hamlet's voice sample, as captured in step **704,** has been successfully detected and stored such that the stored voice sample is associated with the contributing participant (i.e., Hamlet). The association between the stored voice sample and the participant can then be used at a later time, for example, to identify Hamlet as the active speaker. Because the stored voice sample has acoustic characteristics that are specific to the time, location, and environment from which it was sampled, matching the voice of the participant with the stored voice sample is greatly increased during the same conference call in which the sample was captured. Contemporaneous storage and matching may be advantageous because voice samples can be rendered useless in a later setting where the environmental acoustics can dramatically change voice signals.

In an example, a voice sample is captured during an initial phase of a conference call, such as during a roll call. The roll call can provide an initial association between a speaker and a location. During roll call, each meeting participant can provide a short verbal statement, such as "Hello, this is Alice speaking." A method, such as the one described above in **FIG. 7****,** can capture the voice sample and determine that it is of sufficient quality. At the same time, the voice channel on which the voice sample is captured is noted. This voice channel may previously have been associated with a particular location, thereby providing an indication that Alice is present in a particular location in accordance with the method **600,** as described above. The method **600** can use the indication to update the shared user interface and display Alice's association with the location that corresponds to the active voice channel.

In one embodiment, once a participant has been initially identified and has been associated with a particular location, the participant may again speak, this time without the use of any additional input indicating that it is she who is speaking. The characteristics of the participant's speech may then be compared with the samples that were captured using the method **700.** If a positive match is detected, the shared user interface may then be updated to indicate that the participant associated with the matching voice sample is speaking.

In some examples, a voice match may fail. In such a case, when a participant who cannot be identified with a voice match is speaking, the shared user interface can indicate the source of the voice signal at a general level (e.g., a meeting location or a conference room) using the active voice channel. For example, if during the roll call, Alice's voice sample was not captured with sufficient quality to specifically identify her on subsequent occasions, an active voice channel can be detected and mapped to an associated location and the shared user interface can display an indication of her location, such as by highlighting the conference room name with which she is associated. In an example, one or more loudest channels are identified as active voice channels. For example, when Alice and Ed are talking at the same time, both speakers can be displayed as active speakers.

In an example embodiment, the voice sample is captured locally (e.g., on the user's machine) by client software. In an example embodiment, the voice sample is carried over a voice network and captured at a central location (e.g., a server) for later analysis. The analysis may, for example, be performed locally or at a central location. In some examples, the voice sample is stored after it is captured for use at later meetings.

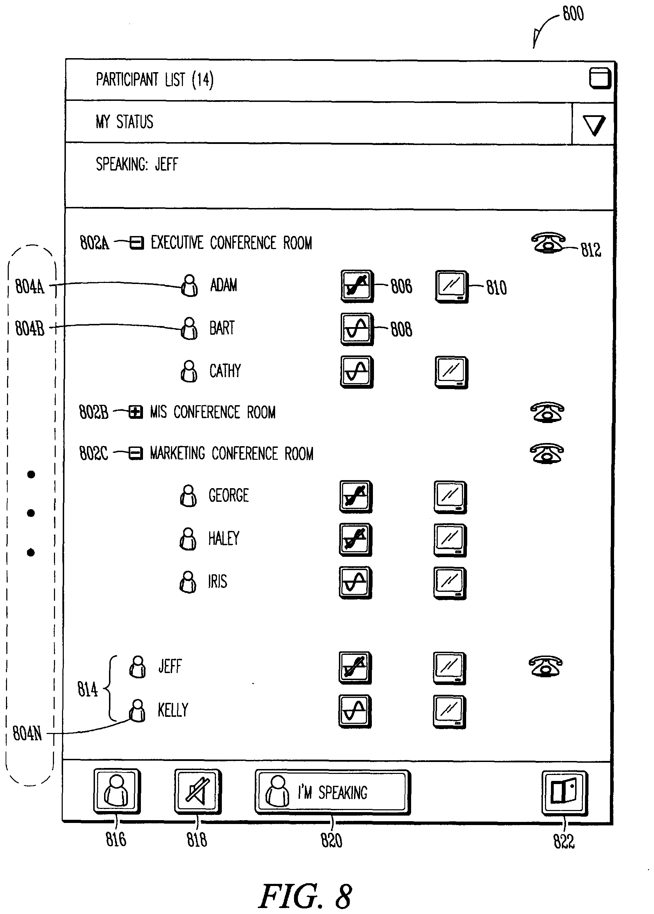

**FIG. 8** is an example user interface **800** showing the state of the conference call participants at some point in time. In this example, three conference rooms have been created: "Executive Conference Room" **802A,** "MIS Conference Room" **802B,** and "Marketing Conference Room" **802C**. Conference rooms **802A** and **802C** are shown in an expanded state, while conference room **802B** is shown in a collapsed state. In an example, user may expand or collapse the conference room view using the '+' and '-' icons located near the conference room name. In other examples, the conference room views can be expanded and collapsed using other methods, such as by double clicking on the conference room name or using a context-sensitive menu.

In this example, the conference call participants **804A, 804B, ..., 804N** are grouped under a conference room name if they are associated with the conference room or left in the general pool **814.** In this example, the general pool **814** is indicated by providing the attendee's name left-justified to the user interface **800.** In other examples, the general pool may be shown as a separate group under a generic name, such as "Unassigned" or "General Pool." In such an example, the list of those participants that are unassigned to a specific conference room may be expanded and collapsed in a similar fashion as described above.

In this example embodiment, icons are used to indicate the status of various conference call features. For example, a "no voiceprint" icon **806** is used to show that the attendee does not have a voice voiceprint captured. This may be the case when an attendee has chosen not to speak yet during a conference call or when a voice sample was obtained but found deficient for some reason. The waveform icon **808** is used to show that a voice sample has been detected and is associated with the attendee. A monitor screen icon **810** is used to indicate that an attendee has a display personally available, such as by using a personal computer. The absence of the monitor screen icon **810** may indicate that a person is calling in from a remote location (e.g., using a cell phone or hotel phone without a networked computer available) or that the person is in the conference room, but does not have a computer available. In this example, the final indicator icon is the phone icon **812.** The phone icon **812** can be used to indicate that a person or conference room has voice capability. The icon can also be used to indicate whether a speaker is available. In this example, the presence of a phone icon **812** indicates that each of the conference rooms **802A, 802B, 802C** has a community microphone and speaker available. In some examples, more than one microphone or speaker is used in a conference room. In addition, when an individual connects to the conference call, they may also have a phone icon **812** to indicate that telephonic capability is available. Telephonic capability may be provided by a traditional land line phone, cellular phone, voice over IP, or other forms of telecommunication. In other example embodiments, more or fewer icons or indications can be used to further specify a condition or status of a person, a service, or other elements.

In addition to the indication icons, one or more control icons may be provided. In this example, an "add user" icon **816** is available on the user interface **800.** Activating or clicking on the add user icon **816** may bring up a secondary window that allows the user to input a name of the added user. In an example, the newly added conference call participant's name is added to the general pool **814.** In another example, the secondary window may allow the user to indicate where to place the new user. The add user capability may be useful when a participant does not have access to the shared user interface **800,** such as when a person does not have a computer available. In this case, another computer-enabled participant may then add the user to ensure the integrity of the conference call roster. In an example, after the new attendee is added, all of the same functionality is available to them as with any other participant. So, if the added computer-less person provides an appropriate indication when they are speaking, e.g., presses a keystroke on another participant's computer, then the system can capture a voice sample and use it, assuming that it is of sufficient quality, to identify the speaker in the future.

Another control icon is the mute icon **818.** The mute icon **818** allows the user to toggle their microphone on and off. In an example embodiment, when the mute icon **818** is enabled in a conference room, the whole room is muted and thus, no aural communication is provided to the other participants (e.g., conference rooms or individuals that have connected).

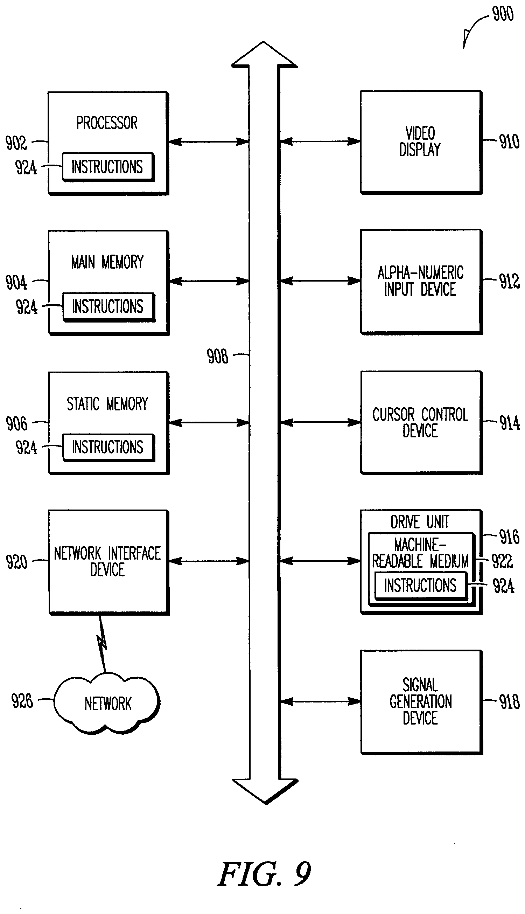

**FIG. 9** illustrates a diagrammatic representation of a machine in the exemplary form of a computer system **900** within which a set or sequence of instructions, for causing the machine to perform any one of the methodologies discussed herein, may be executed. In alternative embodiments, the machine may comprise a computer, a network router, a network switch, a network bridge, Personal Digital Assistant (PDA), a cellular telephone, a web appliance, set-top box (STB) or any machine capable of executing a sequence of instructions that specify actions to be taken by that machine.

The computer system **900** includes a processor **902,** a main memory **904** and a static memory **906,** which communicate with each other via a bus **908.** The computer system **900** may further include a video display unit **910** (e.g., a liquid crystal display (LCD) or a cathode ray tube (CRT)). The computer system **900** also includes an alphanumeric input device **912** (e.g., a keyboard), a cursor control device **914** (e. g., a mouse), a disk drive unit **916,** a signal generation device **918** (e.g., a speaker) and a network interface device **920** to interface the computer system to a network **922.**

The disk drive unit **916** includes a machine-readable medium **924** on which is stored a set of instructions or software **926** embodying any one, or all, of the methodologies described herein. The software **926** is also shown to reside, completely or at least partially, within the main memory **904** and/or within the processor **902.** The software **926** may further be transmitted or received via the network interface device **920.**

For the purposes of this specification, the term "machine-readable medium" shall be taken to include any medium which is capable of storing or encoding a sequence of instructions for execution by the machine and that cause the machine to perform any one of the methodologies of the inventive subject matter. The term "machine-readable medium" shall accordingly be taken to include, but not be limited to, solid-state memories, optical and magnetic disks, and carrier wave signals. Further, while the software is shown in **FIG. 9** to reside within a single device, it will be appreciated that the software could be distributed across multiple machines or storage media, which may include the machine-readable medium.

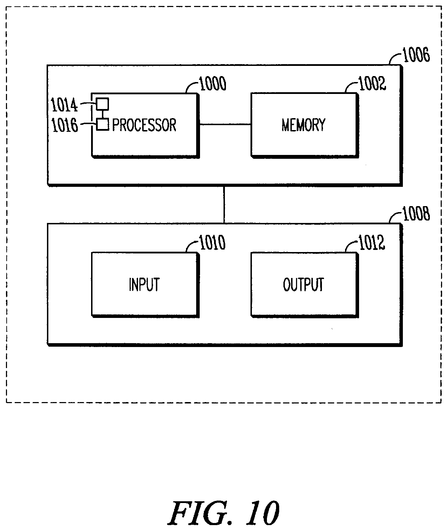

**FIG. 10** illustrates portions of a system (e.g., a computer or client workstation **102, 106** or a network server **110** as illustrated in **FIG. 1**) that is capable of receiving and analyzing a voice sample. In one example, a processor **1000** is connected to interact with a memory **1002.** A wide array of possible processor and memory combinations are available. Processors **1000** may include commercial units (e.g. Pentium, Motorola 68000 series, PowerPC) or specialized units made for use in specific applications. The memory **302** can include any memory, such as solid-state, magnetic, or optical media.

A user interface **1008** is typically connected to the processor-memory combination **1006.** This user interface **1008** typically includes an input device **1010** and an output device **1012.** The input device **1010** can be one or more of a keyboard, a mouse, a touchpad, a microphone, a sensing device, a monitoring device, or any other type of device that allows a computer to receive commands and input data from a user. The output device **1012** can include such things as a monitor, a printer, a speaker, or any other type of device that allows a system to represent resultant data to the user.

In one example, a voice sample is received by a sound capture module **1014.** The sound capture module **1014** may optionally store the voice sample in the memory **1002.** In some example embodiments, a voice analyzer module **1016** compares the voice sample stored in memory **1002** to other voice samples. The user interface **1008** may be adaptively updated depending on whether or not a match is found.

It is to be understood that the above description is intended to be illustrative, and not restrictive. For example, the above-described embodiments (and/or aspects thereof) may be used in combination with each other. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method embodiments described herein may be computer-implemented. Some embodiments may include computer-readable media encoded with a computer program (e.g., software), which includes instructions operable to cause an electronic device to perform methods of various embodiments. A software implementation (or computer-implemented method) may include microcode, assembly language code, or a higher-level language code, which further may include computer-readable instructions for performing various methods. The code may form portions of computer program products. Further, the code may be tangibly stored on one or more volatile or non-volatile computer-readable media during execution or at other times. These computer-readable media may include, but are not limited to, hard disks, removable magnetic disks, removable optical disks (e.g., compact disks and digital video disks), magnetic cassettes, memory cards or sticks, random access memories (RAMS), read only memories (ROMs), and the like.

The Abstract of the Disclosure is provided to comply with 37 C.F.R. §1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, various features may be grouped together to streamline the disclosure. This method of disclosure is not to be interpreted as reflecting an intention that the claimed embodiments require more features than are expressly recited in each claim. Rather, as the following claims reflect, inventive subject matter may lie in less than all features of a single disclosed embodiment. Thus the following claims are hereby incorporated into the Detailed Description, with each claim standing on its own as a separate embodiment.

## Claims

1. A computer-assisted method of organizing meeting participants comprising:
identifying (204) a meeting participant of a plurality of meeting participants, the plurality of meeting participants participating in a single shared conference, the single shared conference comprising a plurality of meeting locations;
determining (206. 602) whether the meeting participant is associated with a meeting location of the plurality of meeting locations;
if it is determined that the meeting participant is associated with the meeting location, then providing (210, 606) an indication of the association between the meeting participant and the meeting location in a participant list on a computer display; and
if it is determined that the meeting participant is not associated with any of the plurality of meeting locations, then providing (212) an indication of the meeting participant in the participant list without any association with any of the plurality of meeting locations.

2. The method of claim 1, wherein the indication of the association includes at least one sub-roster related to one of a plurality of meeting locations.

3. The method of claim 1, wherein the indication of the association is a hierarchical tree display.

4. The method of claim 1, wherein the meeting location is a geographic location or a conference room.

5. The method of claim 1, wherein identifying the meeting participant comprises:
providing a login screen to the meeting participant;
receiving login information from the meeting participant; and
using the login information to determine the meeting participant's identity.

6. The method of claim 1, wherein identifying the meeting participant comprises:
receiving a voice sample of the meeting participant;
comparing characteristics of the voice sample to characteristics of one or more stored voice samples; and
if the comparison results in a match, then using the match to determine the meeting participant's identity.

7. The method of claim 1, wherein determining whether the meeting participant is associated with the meeting location comprises:
receiving location identification information from the meeting participant and
using the location identification information to determine the meeting participant's location.

8. The method of claim 7, wherein the location identification information is one of a vocal command, a keystroke, or a mouse action.

9. The method of claim 7, wherein the location identification information is an indication that a meeting participant is currently speaking and wherein using the location identification information comprises:
detecting a voice signal of the current speaker;
associating the voice signal with at least one voice channel; and
determining the location of the meeting participant using the corresponding voice channel.

10. The method of claim 9, wherein associating the voice signal with activity on the voice channel occurs only if the activity uniquely identifies the location.

11. The method of claim 1, wherein determining whether the meeting participant is associated with the meeting location comprises:
receiving an indication that the meeting participant is currently speaking;
detecting an active voice channel associated with the meeting participant's speech; and
using the active voice channel to determine a meeting participant's location.

12. The method of claim 11, wherein the indication that the meeting participant is currently speaking is one of a vocal command, a keystroke, or a mouse action.

13. The method of claim 11, wherein the indication that the meeting participant is currently speaking is provided by the meeting participant.

14. The method of claim 11, wherein the indication that a meeting participant is currently speaking is provided by another meeting participant.

15. The method of claim 11, wherein using the voice channel only occurs if the active speaker can be unambiguously associated with the meeting location.

16. The method of claim 1, comprising:
receiving voice data;
determining if the voice data matches voice data of a current meeting participant; and
if there is a match, indicating a speaking meeting participant on the computer display.

17. A computer-readable medium including instructions that, when performed by a computer, cause the computer to perform a method according to any preceding claim.

18. A computer for organizing meeting participants comprising a processor configured to perform the method of any one of claims 1 to 16.

19. A system for organizing meeting participants comprising:
one or more conference end points; and
one or more hubs communicatively coupled to the one or more conference endpoints, wherein each hub comprises a computer according to claim 18.

20. The system of claim 19, wherein the conference end point is one of a microphone, a video conference station, a telephonic device, or a computer.

## Patentansprüche

1. Computerassistiertes Verfahren zum Organisieren von Sitzungsteilnehmern, das Folgendes beinhaltet:
Identifizieren (204) eines Sitzungsteilnehmers aus einer Mehrzahl von Sitzungsteilnehmern, wobei die Mehrzahl von Sitzungsteilnehmern an einer einzigen Gemeinschaftskonferenz teilnehmen, wobei die einzige Gemeinschaftskonferenz eine Mehrzahl von Sitzungsorten umfasst;
Feststellen (206, 602), ob der Sitzungsteilnehmer mit einem Sitzungsort aus der Mehrzahl von Sitzungsorten assoziiert ist;
Bereitstellen (210, 606), wenn festgestellt wird, dass der Sitzungsteilnehmer mit dem Sitzungsort assoziiert ist, einer Anzeige der Assoziation zwischen dem Sitzungsteilnehmer und dem Sitzungsort in einer Teilnehmerliste auf einem Computer-Display; und
Bereitstellen (212), wenn festgestellt wird, dass der Sitzungsteilnehmer nicht mit einem aus der Mehrzahl von Sitzungsorten assoziiert ist, einer Anzeige des Sitzungsteilnehmers in der Anzeigeliste ohne jegliche Assoziation mit einem aus der Mehrzahl von Sitzungsorten.

2. Verfahren nach Anspruch 1, wobei die Anzeige der Assoziation wenigstens einen Subplan in Bezug auf einen aus einer Mehrzahl von Sitzungsorten beinhaltet.

3. Verfahren nach Anspruch 1, wobei die Anzeige der Assoziation eine hierarchische Baumanzeige ist.

4. Verfahren nach Anspruch 1, wobei der Sitzungsort ein geografischer Ort oder ein Konferenzraum ist.

5. Verfahren nach Anspruch 1, wobei das Identifizieren des Sitzungsteilnehmers Folgendes beinhaltet:
Bereitstellen eines Anmeldebildschirms dem Sitzungsteilnehmer;
Empfangen von Anmeldeinformationen von dem Sitzungsteilnehmer; und
Benutzen der Anmeldeinformationen zum Feststellen der Identität des Sitzungsteilnehmers.

6. Verfahren nach Anspruch 1, wobei das Identifizieren des Sitzungsteilnehmers Folgendes beinhaltet:
Empfangen einer Sprachprobe des Sitzungsteilnehmers;
Vergleichen von Charakteristiken der Sprachprobe mit Charakteristiken von einer oder mehreren gespeicherten Sprachproben; und
Benutzen, wenn der Vergleich zu einer Übereinstimmung führt, der Übereinstimmung zum Bestimmen der Identität des Sitzungsteilnehmers.

7. Verfahren nach Anspruch 1, wobei das Feststellen, ob der Sitzungsteilnehmer mit dem Sitzungsort assoziiert ist, Folgendes beinhaltet:
Empfangen von Ortsidentifikationsinformationen von dem Sitzungsteilnehmer, und
Benutzen der Ortsidentifikationsinformationen zum Bestimmen des Orts des Sitzungsteilnehmers.

8. Verfahren nach Anspruch 7, wobei die Ortsidentifikationsinformation eines aus einem Sprachbefehl, einem Tastenanschlag oder einer Mausaktion ist.

9. Verfahren nach Anspruch 7, wobei die Ortsidentifikationsinformation eine Anzeige ist, dass ein Sitzungsteilnehmer derzeit spricht, und wobei die Benutzung der Ortsidentifikationsinformation Folgendes beinhaltet:
Erkennen eines Sprachsignals des aktuellen Sprechers;
Assoziieren des Sprachsignals mit wenigstens einem Sprachkanal; und
Bestimmen des Orts des Sitzungsteilnehmers anhand des entsprechenden Sprachkanals.

10. Verfahren nach Anspruch 9, wobei das Assoziieren des Sprachsignals mit Aktivität auf dem Sprachkanal nur dann erfolgt, wenn die Aktivität den Ort eindeutig identifiziert.

11. Verfahren nach Anspruch 1, wobei das Feststellen, ob der Sitzungsteilnehmer mit dem Sitzungsort assoziiert ist, Folgendes beinhaltet:
Empfangen einer Anzeige, dass der Sitzungsteilnehmer derzeit spricht;
Erkennen eines aktiven Sprachkanals, der mit der Sprache des Sitzungsteilnehmers assoziiert ist; und
Benutzen des aktiven Sprachkanals zum Bestimmen eines Orts des Sitzungsteilnehmers.

12. Verfahren nach Anspruch 11, wobei die Anzeige, dass der Sitzungsteilnehmer derzeit spricht, eines aus einem Sprachbefehl, einem Tastenanschlag oder einer Mausaktion ist.

13. Verfahren nach Anspruch 11, wobei die Anzeige, dass der Sitzungsteilnehmer derzeit spricht, vom Sitzungsteilnehmer bereitgestellt wird.

14. Verfahren nach Anspruch 11, wobei die Anzeige, dass ein Sitzungsteilnehmer derzeit spricht, von einem anderen Sitzungsteilnehmer bereitgestellt wird.

15. Verfahren nach Anspruch 11, wobei die Benutzung des Sprachkanals nur dann erfolgt, wenn der aktive Sprecher eindeutig mit dem Sitzungsort assoziiert ist.

16. Verfahren nach Anspruch 1, das Folgendes beinhaltet:
Empfangen von Sprachdaten;
Feststellen, ob die Sprachdaten mit Sprachdaten eines aktuellen Sitzungsteilnehmers übereinstimmen; und
Anzeigen, wenn es eine Übereinstimmung gibt, eines sprechenden Sitzungsteilnehmers auf dem Computer-Display.

17. Computerlesbares Medium, das Befehle beinhaltet, die bei Ausführung durch einen Computer bewirken, dass der Computer ein Verfahren nach einem vorherigen Anspruch durchführt.

18. Computer zum Organisieren von Sitzungsteilnehmern, der einen Prozessor umfasst, konfiguriert zum Durchführen des Verfahrens nach einem der Ansprüche 1 bis 16.

19. System zum Organisieren von Sitzungsteilnehmern, das Folgendes umfasst:
einen oder mehrere Konferenzendpunkte; und
einen oder mehrere Hubs, die kommunikativ mit den ein oder mehreren Konferenzendpunkten gekoppelt sind, wobei jeder Hub einen Computer nach Anspruch 18 umfasst.

20. System nach Anspruch 19, wobei der
Konferenzendpunkt eines aus einem Mikrofon, einer Videokonferenzstation, einem Telefongerät oder einem Computer ist.

## Revendications

1. Procédé assisté par ordinateur d'organisation de participants de réunion, consistant à :
identifier (204) un participant de réunion d'une pluralité de participants de réunion, la pluralité de participants de réunion participant à une unique conférence partagée, l'unique conférence partagée comprenant une pluralité de lieux de réunion ;
déterminer (206, 602) si le participant de réunion est associé à un lieu de réunion de la pluralité de lieux de réunion ;
s'il est déterminé que le participant de réunion est associé au lieu de réunion, alors fournir (210, 606) une indication de l'association entre le participant de réunion et le lieu de réunion dans une liste de participants sur un écran d'ordinateur ; et
s'il est déterminé que le participant de réunion n'est pas associé au lieu de réunion, alors fournir (212) une indication du participant de réunion dans la liste de participants sans une quelconque association avec un lieu de réunion quelconque de la pluralité de lieux de réunion.

2. Procédé selon la revendication 1, dans lequel l'indication de l'association comprend au moins une sous-liste relative à un lieu de réunion d'une pluralité de lieux de réunion.

3. Procédé selon la revendication 1, dans lequel l'indication de l'association est un affichage d'arbre hiérarchique.

4. Procédé selon la revendication 1, dans lequel le lieu de réunion est un lieu géographique ou une salle de conférences.

5. Procédé selon la revendication 1, dans lequel l'identification du participant de réunion consiste à :
fournir un écran de connexion au participant de réunion ;
recevoir une information de connexion en provenance du participant de réunion ; et
utiliser l'information de connexion pour déterminer l'identité du participant de réunion.

6. Procédé selon la revendication 1, dans lequel l'identification du participant de réunion consiste à :
recevoir un échantillon vocal du participant de réunion ;
comparer des caractéristiques de l'échantillon vocal à des caractéristiques d'un ou plusieurs échantillons vocaux stockés ; et
si la comparaison donne lieu à une coïncidence, alors utiliser la coïncidence pour déterminer l'identité du participant de réunion.

7. Procédé selon la revendication 1, dans lequel la détermination de si le participant de réunion est associé au lieu de réunion consiste à :
recevoir une information d'identification de lieu en provenance du participant de réunion, et
utiliser l'information d'identification de lieu pour déterminer le lieu du participant de réunion.

8. Procédé selon la revendication 7, dans lequel l'information d'identification de lieu est une commande vocale, une frappe sur une touche ou une action de souris.

9. Procédé selon la revendication 7, dans lequel l'information d'identification de lieu est une indication qui indique qu'un participant de réunion est en train de parler, et dans lequel l'utilisation de l'information d'identification de lieu consiste à :
détecter un signal vocal du locuteur actuel ;
associer le signal vocal à au moins un canal vocal ; et
déterminer le lieu du participant de réunion au moyen du canal vocal correspondant.

10. Procédé selon la revendication 9, dans lequel l'association du signal vocal à une activité sur le canal vocal se produit uniquement si l'activité identifie le lieu de manière unique.

11. Procédé selon la revendication 1, dans lequel la détermination de si le participant de réunion est associé au lieu de réunion consiste à :
recevoir une indication indiquant que le participant de réunion est en train de parler ;
détecter un canal vocal actif associé au discours du participant de réunion ; et
utiliser le canal vocal actif pour déterminer un lieu du participant de réunion.

12. Procédé selon la revendication 11, dans lequel l'indication indiquant que le participant de réunion est en train de parler est une commande vocale, une frappe sur une touche ou une action de souris.

13. Procédé selon la revendication 11, dans lequel l'indication indiquant que le participant de réunion est en train de parler est fournie par le participant de réunion.

14. Procédé selon la revendication 11, dans lequel l'indication indiquant qu'un participant de réunion est en train de parler est fournie par un autre participant de réunion.

15. Procédé selon la revendication 11, dans lequel l'utilisation du canal vocal se produit uniquement si le locuteur actif peut être associé sans aucune ambiguïté au lieu de réunion.

16. Procédé selon la revendication 1, consistant à :
recevoir des données vocales ;
déterminer si les données vocales coïncident avec des données vocales d'un participant de réunion actuel ; et
s'il y a une coïncidence, indiquer un participant de réunion en train de parler sur l'écran d'ordinateur.

17. Support lisible par ordinateur comprenant des instructions qui, lorsqu'elles sont exécutées par un ordinateur, amènent l'ordinateur à réaliser un procédé selon l'une quelconque des revendications précédentes.

18. Ordinateur pour l'organisation de participants de réunion, comprenant un processeur configuré pour réaliser le procédé selon l'une quelconque des revendications 1 à 16.

19. Système pour l'organisation de participants de réunion, comprenant :
un ou plusieurs terminaux de conférence ; et
un ou plusieurs concentrateurs couplés en communication au ou aux terminaux de conférence, chaque concentrateur comprenant un ordinateur selon la revendication 18.

20. Système selon la revendication 19, dans lequel le terminal de conférence est un microphone, une poste de vidéoconférence, un dispositif téléphonique ou un ordinateur.
